# EUROPEAN PATENT SPECIFICATION

(11) **EP 4 151 530 B1**
(45) Date of publication and mention of the grant of the patent: **04.12.2024**
(21) Application number: 22194832.6
(22) Date of filing: 09.09.2022
(51) Int. Cl.: B64D 13/06

(54) **VEHICLE, ENVIRONMENTAL CONTROL SYSTEM, AND METHOD FOR OPERATING AN ENVIRONMENTAL CONTROL SYSTEM**
FAHRZEUG, KLIMAREGELUNGSSYSTEM UND VERFAHREN ZUM BETREIBEN EINES KLIMAREGELUNGSSYSTEMS
VÉHICULE, SYSTÈME DE CONTRÔLE ENVIRONNEMENTAL ET PROCÉDÉ DE FONCTIONNEMENT D'UN SYSTÈME DE CONTRÔLE ENVIRONNEMENTAL

(30) Priority: 16.09.2021 US 202117447852
(43) Date of publication of application: 22.03.2023
(73) Proprietor: Gulfstream Aerospace Corporation, Savannah, GA 31402 (US)
(72) Inventor: TATE, Adam, Savannah, 31402 (US); CROME, Brad, Savannah, 31402 (US); HULL, Randy, Savannah, 31402 (US); DAS, Suman, Savannah, 31402 (US); PRASAD, Dilip, Savannah, 31402 (US); ROTHERMEL, Thomas, Savannah, 31402 (US)
(74) Representative: LKGlobal UK Ltd.

(56) References cited:
- WO-A1-01/26967
- US-A- 4 209 993
- US-A1- 2008 022 688
- US-A1- 2013 305 748
- US-A1- 2021 024 219
- US-B2- 7 086 239

## Description

### TECHNICAL FIELD

The technical field relates generally to environmental control systems for vehicles, and more particularly relates to environmental control systems that provide enhanced cooling for vehicle interiors and methods for operating such environmental control systems.

### BACKGROUND

Vehicles such as aircraft generally utilize either a combination of recycled cabin air and exterior air, or exterior air exclusively to maintain interior air quality when the aircraft is in operation. Many aircraft have an environmental control system (ECS) that typically maintains the interior air quality by supplying air, thermal controls, and ventilation for maintaining cabin pressure for the crew and passengers as well as provides cooling methods for the avionics.

As technology continues to grow and expand, the capability and electronic functionality of aircraft avionics and systems ever increases. As a result of this expanded functionality, there is an increase of heat produced by this equipment and therefore, larger heat loads into the surrounding aircraft environment. To provide a comfort level for passengers and crew aboard the aircraft, increased cooling capacity is needed. Unfortunately, many conventional environmental control systems for aircraft are not designed to meet such needs for increased cooling capacity. This issue can be particularly exacerbated when an aircraft is on the ground, for example before take-off or after landing, on a hot day when the ground ambient air temperature is significantly hotter than the ambient air temperature at higher altitudes when the aircraft is in flight.

Accordingly, it is desirable to provide environmental control systems that address one or more of the foregoing issues, vehicles including such environmental control systems, and methods for operating such environmental control systems. Furthermore, other desirable features and characteristics of the various embodiments described herein will become apparent from the subsequent detailed description and the appended claims, taken in conjunction with the accompanying drawings and this background.

US2021/024219 relates to a compressor temperature control system and method for an aircraft air cycle machine.

### SUMMARY

Various non-limiting embodiments of a vehicle, an environmental control system for a vehicle having an interior, and a method for operating an environmental control system for a vehicle are provided herein.

In a first aspect, the present invention relates to an environmental control system (ECS) as defined in claim 1.

In a second aspect, the present invention relates to a method as defined in claim 7.

In a third aspect, the present invention relates to an aircraft as defined in claim 10.

### BRIEF DESCRIPTION OF THE DRAWINGS

The various embodiments will hereinafter be described in conjunction with the following drawing figures, wherein like numerals denote like elements, and wherein:
FIG. 1 is a schematic view illustrating a vehicle including an environmental control system in accordance with an exemplary embodiment;
FIG. 2 is a schematic view illustrating an ECS refrigeration unit of an environmental control system in accordance with an exemplary embodiment;
FIG. 3 is a schematic view illustrating a portion of an environmental control system including a low limit valve and a low limit valve control in accordance with an exemplary embodiment;
FIG. 4 is a cross-sectional view illustrating of a duct including an ice-phobic treatment of an environmental control system in accordance with an exemplary embodiment; and
FIG. 5 is a block diagram illustrating a method for operating an environmental control system in accordance with an exemplary embodiment.

### DETAILED DESCRIPTION

The following Detailed Description is merely exemplary in nature and is not intended to limit the various embodiments or the application and uses thereof. Furthermore, there is no intention to be bound by any theory presented in the preceding background or the following detailed description.

The exemplary embodiments taught herein provide a vehicle, specifically an aircraft. The vehicle includes a vehicle structure, such as, for example, an aircraft structure, fuselage, or the like, at least partially surrounding an interior containing interior air. A hot air source, such as, for example, an engine(s), an auxiliary power unit (APU), a dedicated electrically- or mechanically-powered compressor, or the like, is supported by the vehicle structure. The hot air source produces hot air that is extracted from the hot air source as hot bleed air.

An environmental control system (ECS) is carried or otherwise supported by the vehicle structure. The environmental control system is in fluid communication with the interior of the vehicle. The environmental control system includes an ECS refrigeration unit (also referred to as an ECS pack) and a low limit valve control. As used herein, the phrase "refrigeration unit" refers to a unit including one or more equipment items that cooperate to cool a fluid (e.g., air) stream(s). Equipment items can include one or more heat exchangers, compressors, valves, controllers, turbines, fans, sensors, conduits/pipes/tubes/ducts, and the like. During operation, the ECS refrigeration unit receives ambient air from outside the vehicle and a first portion and a second portion of the hot bleed air from the aircraft engine bleed air source(s). Within the ECS refrigeration unit, several thermodynamic or unit operations are performed. Heat is indirectly exchanged between the first portion of the hot bleed air and the ambient air to form a partially cooled, hot air stream. The partially cooled, hot air stream is subsequently compressed, further indirect heat exchanged one or more times, and expanded to form a cooled and expanded air stream. The cooled and expanded air stream has a temperature of less than -3.33°C (26°F).

The ECS refrigeration unit includes a low limit valve that introduces the second portion of the hot bleed air to the cooled and expanded air stream. A low limit valve control, which may be mounted on or otherwise form part of the ECS refrigeration unit or may be separate therefrom, regulates the low limit valve, for example via a low limit valve torque motor, to control the rate of introduction of the second portion of the hot bleed air to the cooled and expanded air stream to form a combined air stream that when exiting the ECS refrigeration unit is a sub-freezing air stream. The sub-freezing air stream has a temperature of less than 0°C (32°F) but greater than the cooled and expanded air stream.

Forming the sub-freezing air stream having a temperature of less than 0°C (32°F) but greater than the cooled and expanded air stream when exiting the turbine portion of the ECS refrigeration unit advantageously provides an output air stream that is at a lower temperature than the output air stream from conventional ECS packs. As such, the ECS refrigeration unit provides enhanced cooling capacity. Further, in an exemplary embodiment, the sub-freezing air stream is advanced downstream and combined with additional hot bleed air to form the mixed air stream having a temperature of from about 20°C to about 24.4°C (68°F to about 76°F) which is introduced into the interior cabin area to provide a comfort level for passengers and crew aboard the vehicle, as well as cooling for the avionics.

Additionally, in an exemplary embodiment, the ECS refrigeration unit may be controlled to provide two different modes of cooling, an enhanced cooling capacity mode as discussed above, and a normal cooling capacity mode where the low limit valve control regulates the low limit valve to control the rate of introduction of the second portion of the hot bleed air to the cooled and expanded air stream to form a combined air stream that when exiting the ECS refrigeration unit has a temperature above freezing, such as a temperature of greater than about 0°C (32°F), such as from about 1.11°C (34°F) to about 2.22°C (36°F), for example about 1.67°C (35°F). In this embodiment, the ECS refrigeration unit can be selectively operated in the enhanced cooling capacity mode, for example, when the vehicle or aircraft is on the ground on a relatively hot and/or humid day when increased cooling demand is required, and otherwise be selectively operated in the normal cooling capacity mode when cooling demand is more normal or typical, for example, when the vehicle or aircraft is in flight or on the ground on a relatively cool and/or relatively low humidity day.

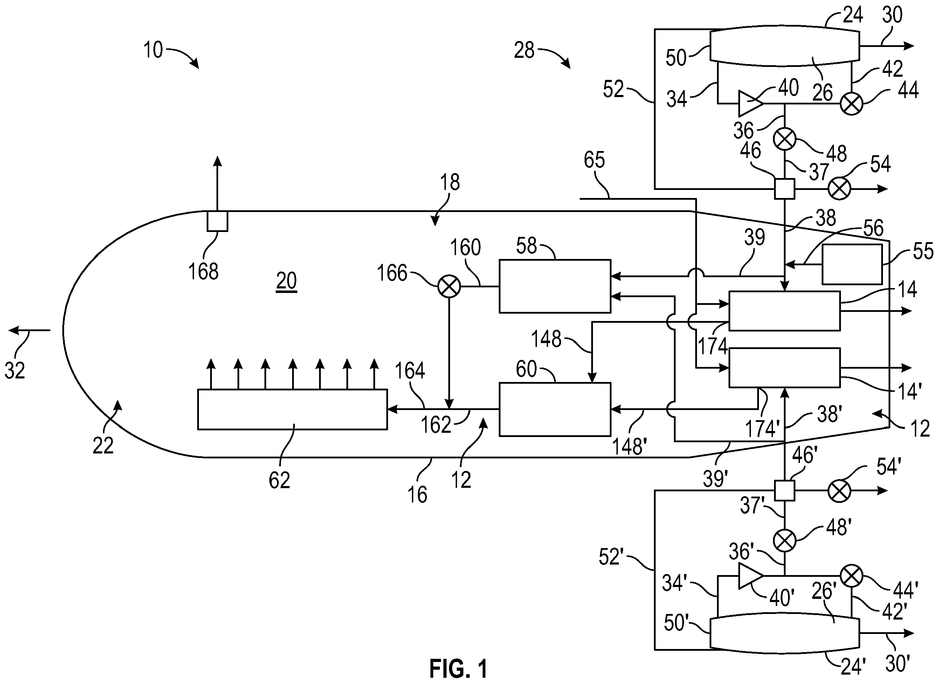

FIG. 1 illustrates a schematic view of a vehicle 10 including an environmental control system (ECS) 12 with ECS refrigeration units 14 and 14' in accordance with an exemplary embodiment. The vehicle 10 includes a vehicle structure 16 at least partially surrounding an interior 18 of the vehicle 10 and containing interior air 20. As illustrated, the vehicle 10 is an aircraft and the vehicle structure 16 is an aircraft structure such as, for example, a fuselage. The interior 18 may include one or more interior areas 22 such as a cabin area, a lavatory area, a cockpit area, and/or the like.

The vehicle 10 includes engines 24 and 24' and auxiliary engine in the form of auxiliary power unit (APU) 55 coupled to the vehicle structure 16 and in fluid communication with the environmental control system 12. As illustrated, the vehicle 10 includes two engines 24 and 24', but it is to be understood that various alternate embodiments of the vehicle 10 can include a single engine 24 or more than two engines 24 and 24'. Additionally, for purposes of simplicity, further discussions of the engines 24 and 24', the ECS refrigeration units 14 and 14", and their associated equipment items will be described in terms of engine 24 and ECS refrigeration unit 14, but it is the understood that these components and their associated equipment items are essentially identical to the engine 24', the ECS refrigeration unit 14', and their associated equipment items.

The engine 24 is, for example, a turbine engine such as, for example, a turbofan engine. The engine 24 includes one or more compressors 26 (26') and takes in ambient air 28 and pressurizes and combusts at least a portion of the ambient air 28 with fuel in a burner to drive one or more turbines to produce thrust 30 (30') that propels the vehicle 10 in a general forward direction 32.

In an exemplary embodiment, when the engine 24 is running, for example during flight, hot bleed air is extracted from the engine 24 via line 34 (34') and/or line 42 (42') and fluidly communicated to the environmental control system 12 via lines 36 (36'), 37 (37'), 38 (38'), and 39 (39'). The hot bleed air may be extracted from any of various compressor stage ports of the compressor(s) 26 of the engine 24. For example, hot bleed air extracted via line 34 corresponds to a lower compressor stage while hot bleed air extracted via line 42 corresponds to a higher compressor stage. When extracted, the hot bleed air is at increased pressure and temperature compared to the ambient air 28. For example, at an altitude of about 45,000 feet, the ambient air 26 is at a temperature of about -56.7°C (-70°F) and a pressure of about 144.8 kPa (2.1 psia) psia and the hot bleed air 24 has a temperature of from about 204°C (400°F) to about 427°C (800°F) and a pressure of from about 7.91 to about 11.4 MPa (about 100 to 150 psig) when extracted from a low stage of the compressor 26 and a temperature of from about 315°C to about 649°C (about 600°F to about 1200°F) and a pressure of from about 18.3 MPa to about 35.5 MPa (250 psig to about 500 psig) when extracted from a high stage of the compressor 26 (1 psig ≈ 6.895kPa).

As discussed above, the hot bleed air is extracted either from a lower compressor stage via line 34 or a higher compressor stage via line 42. In an exemplary embodiment, a check valve 40 (40') moderates the flow of the hot bleed air when extracted via line 34 and a control valve 44 (44') moderates the flow of the hot bleed air when extracted via line 42. The check valve 40 also prevents reverse flow between the higher compressor stage and the lower compressor stage. In an exemplary embodiment, hot bleed air from the higher compressor stage may be routed from the engine 24 via line 42 that includes the control valve 44 for regulating the flow rate of bleed air from the engine 24 for operating cases where lower stage extraction via line 34 would be insufficient for hot bleed air system demand. Hot bleed air extracted via line 42 and/or hot bleed air extracted via line 34 is routed to a heat exchanger 46 via lines 36 and 37. A control valve 48 (48'), which is disposed between lines 36 and 37, regulates the pressure of hot bleed air to the heat exchanger 46 (46'). In an exemplary embodiment, the regulated pressure from the control valve 48 to line 37 is from about 35 to about 60 psig depending on phase of flight of vehicle 10 and power setting of engine 24 and 24'.

In an exemplary embodiment, the heat exchanger 46 is a single pass cross flow plate/fin stack heat exchanger 46. The heat exchanger 46 provides the environmental control system 12 with the hot bleed air at a regulated temperature and pressure. For example, the hot bleed air communicated via lines 36 and 37 to the heat exchanger 46 is cooled by the heat exchanger 46 to a temperature of about 400°F under normal dual engine bleed operation, or 500°F during certain single engine bleed conditions and is then passed along to the environmental control system via line 38. In an exemplary embodiment, the engine 24 includes a fan 50 (50') and engine fan air is extracted via line 52 (52') and fluidly communicated to the heat exchanger 46 for cooling the hot bleed air supplied from control valve 48. The heat exchanger 46 may be operably coupled to a control valve 54 (54') that regulates the flow rate of engine fan air through the heat exchanger 46 with the exchanged fan air being exhausted overboard. Additionally, and in accordance with an exemplary embodiment, the heat exchanger 46 may include additional valves, controls, and or sensors to assist in regulating the temperature and pressure of the hot bleed air for fluid communication to the environmental control system 12.

As such, in an exemplary embodiment, when the engine 24 is running, for example during flight, the engine 24 is a hot air source (e.g., an aircraft engine bleed air source) that produces hot air that is extracted as the hot bleed air, which is fluidly communicated to the environmental control system 12 as discussed above. Alternatively, the hot bleed air can be extracted from another hot air source. In an exemplary embodiment, the vehicle 10 includes the APU 55 that is coupled to the vehicle structure 16 and that is configured as an engine (e.g., another aircraft engine bleed air source) that burns fuel to generate electricity and pneumatic pressure for the vehicle 10 and produce hot air. For example, when the vehicle 10 is on the ground preparing for a departure or having recently landed, the APU may be running to supply electricity to the vehicle 10 and can be used instead as the hot air source to supply hot bleed air that is fluidly communicated to the environmental control system 12 via lines 56, 38, and 39. In an exemplary embodiment, when the hot bleed air is extracted from the APU 55, the hot bleed air has a temperature of from about 204°C to about 316°C (about 400°F to about 600°F) and a pressure of from about 3.4 MPa to about 4.8 MPa (about 35 to about 55 psig).

As briefly discussed above, the environmental control system 12 includes the ECS refrigeration unit 14, and further includes manifolds 58 and 60 and a vehicle supply duct 62. In an exemplary embodiment, a portion(s) of the hot bleed air advanced along line 38 is introduced to the ECS refrigeration unit 14, and another portion of the hot bleed air is introduced to the manifold 58 via line 39. Further, ambient air 28 is introduced to the ECS refrigeration unit 14 via line 65.

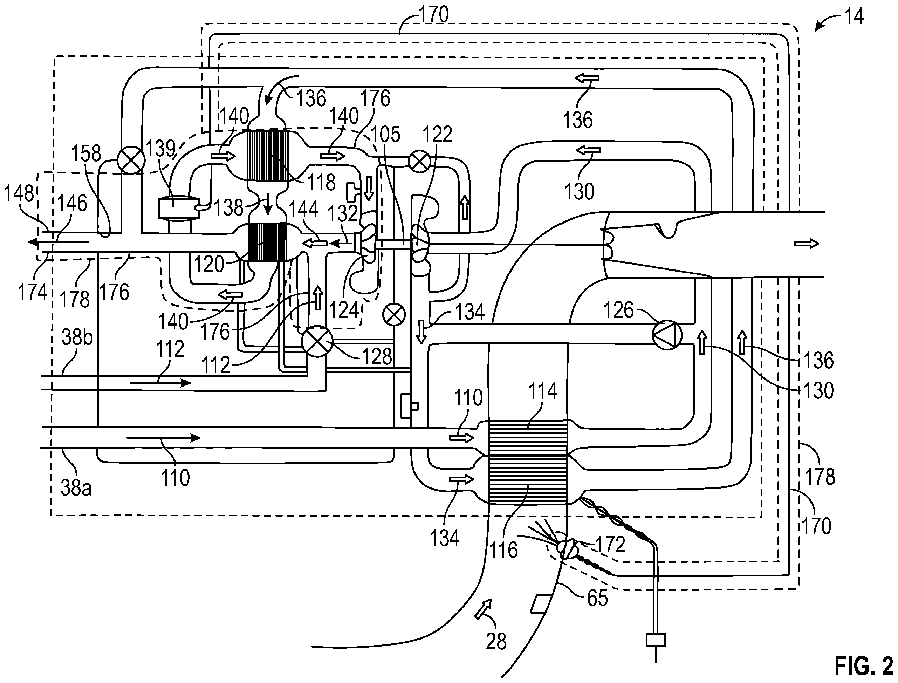

FIG. 2 is a schematic view of the ECS refrigeration unit 14 in accordance with an exemplary embodiment. As discussed above, the ECS refrigeration unit 14 includes one or more equipment items, such as one or more heat exchangers, compressors, valves, controllers, turbines, fans, sensors, conduits/pipes/tubes/ducts, and the like, which cooperate to cool a fluid (e.g., air) stream(s). Referring to FIGS. 1-2, the ECS refrigeration unit 14 receives the ambient air 28 via line 65 and a first portion 110 and a second portion 112 of the hot bleed air via lines 38a and 38b, respectively. In an exemplary embodiment, the ECS refrigeration unit 14 includes heat exchangers 114, 116, 118, and 120, a compressor 122, a turbine 124, a check valve 126, and a low limit valve 128 that are in fluid communication. The heat exchangers 114, 116, 118, and 120 are each configured as a counterflow heat exchanger configured for indirect heat exchange (e.g., heat exchange between two adjacent, counterflowing fluid streams that are separated from each other (not in direct contact with each other) by a heat transfer medium, such as a plate/fins, wall, or the like). As illustrated, in the heat exchanger 114, heat is indirectly exchanged between the ambient air 28 and the hotter, first portion 110 of the hot bleed air to partially cool the first portion 110 of the hot bleed air and form a partially cooled, hot air stream 130.

The ECS refrigeration unit 14 is further operable to compress, further indirect heat exchange, and expand the partially cooled, hot air stream 130 to form a cooled and expanded air stream 132. In an exemplary embodiment, the cooled and expanded air stream 132 has a temperature of less than about -3.33°C (26°F), for example from about -6.67°C to about -3.89°C (20°F to about 25°F) and a pressure of from about 1.22 MPa to about 1.50 MPa (3 psig to about 7 psig).

In particular and as illustrated, during steady state operation of the ECS refrigeration unit 14, the check valve 126 is in the closed position, and the compressor 122 receives and compresses the partially cooled, hot air stream 132 to form a compressed, hot air stream 134. The compressed, hot air stream 134 is passed along to the heat exchanger 116 for indirect heat exchange with the ambient air 28 to partially cool the compressed, hot air stream 134 and form a first partially cooled, compressed, hot air stream 136. The first partially cool, compressed, hot air stream 136 is passed along to the heat exchanger 118 that receives and partially cools the first partially cooled, compressed, hot air stream 136 to form a second partially cooled, compressed, hot air stream 138. The heat exchanger 120 receives and partially cools the second partially cooled, compressed, hot air stream 138 to form an additionally partially cooled, compressed, hot air stream 140 that is looped around and passes through a water separator 139 for water removal and the heat exchanger 118 for indirect heat exchange with the first partially cooled, compressed, hot air stream 136. As illustrated, water removed by the water separator 139 is passed along line 170 to nozzle 172 sprays the water into the incoming ambient air just upstream of the heat exchanger 116 to facilitate cooling. The turbine 124 is in fluid communication with the heat exchanger 118 and receives, expands and cools the additionally partially cooled, compressed, hot air stream 140 to form the cooled and expanded air stream 132. Further, during operation, the turbine 124 drives the compressor 122 via shaft 105. As will be appreciated by those skilled in the art, temporarily during start-up of the ECS refrigeration unit 14, the check valve 126 is in the open position and the partially cooled, hot air stream 132 bypasses the compressor 122 and rather is advanced through the heat exchanges 116, 118 and 120 to the turbine 124, to drive the turbine, which drives the compressor 122 via the shaft 105, to pressurize the unit 14, thereby closing the check valve 126 and transitioning the unit 14 to steady state operation.

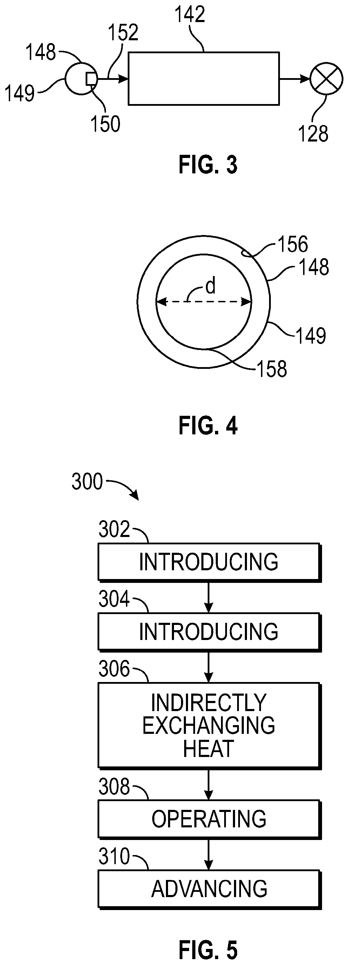

Referring also to FIG. 3, the second portion 112 of the hot bleed air is passed through the low limit valve 128 and introduced to the cooled and expanded air stream 132. A low limit valve control 142 regulates the low limit valve 128 to control the rate of introduction of the second portion 112 of the hot bleed air to the cooled and expanded air stream 132 to form a combined air stream 144. The combined air stream 144 is a sub-freezing air stream 146 that when exiting the ECS refrigeration unit 14 has a temperature of less than about 0°C (32°F) but greater than the cooled and expanded air stream 132, such as from about -3.9°C to about -1.1°C, for example -3.3°C (about 25 to about 30°F, for example about 26°F).

In an exemplary embodiment, the heat exchanger 120 is in fluid communication with the turbine 124 and the low limit valve 128 to receive the combined air stream 144 that is passed through the heat exchanger 120 for indirect heat exchange with the second partially cooled, compressed, hot air stream 138 prior to exiting the ECS refrigeration unit 14 as the sub-freezing air stream 146.

In an exemplary embodiment, the sub-freezing air stream 146 exits the ECS refrigeration unit 14 through an outlet 174 (174') and along line 148 (148') that is configured as a duct 149 that is disposed downstream from the ECS refrigeration unit 14 and that fluidly connects the ECS refrigeration unit 14 to the manifold 60. The duct 149 is coupled to the outlet 174. In an exemplary embodiment, a temperature sensor 150 is disposed in the duct 149, for example coupled to the duct's 149 wall inner surface proximate to the exit of the ECS refrigeration unit 14. The temperature sensor 150 measures a temperature of the sub-freezing air stream 146 and communicates with the low limit valve control 142 via line 152 to provide a signal indicative of the temperature of the sub-freezing air stream 146 to the low limit valve control 142. In an exemplary embodiment, the low limit valve control 142 regulates the low limit valve 128 in response to the signal.

Referring also to FIG. 4, the duct 149 has an inner surface 56 that has an ice-phobic treatment 158. A surface having an ice-phobic treatment means that the surface substantially resists or prevents ice nucleation formation of a supercooled water droplet, water below the normal freezing temperature of 0°C (32°F), on the surface. That is, water in its solid form is prevented or delayed in forming on such surfaces, or if formed, the rate of accumulation on the surface is significantly slowed down. Additionally, adhesion of ice to the surface is reduced, such that it can be easily removed. In an exemplary embodiment, the ice-phobic surface has an ice adhesion strength of less than about 100 kPa, for example less than about 20 kPa. Various treatments known to those skilled in the art for forming an ice-phobic surface may be used. Non-limiting examples of ice-phobic treatments for surfaces include forming microscale structures by laser ablation, surfaces with nanostructures formed by dry etching, micro-inset and nano-structured aluminum surfaces formed by etching and anodizing, multilayer spin-coated micro-sized PMMA spheres that are crosslinked by silica, spray coated organo-silane/attapulgite nanocomposites, or the like. As such, when the sub-freezing air stream 146 is received and advanced along the duct 149 disposed at line 148, the duct 149 resists, delays, or prevents ice formation along its the inner surface 156. Advantageously, this minimizes any chance of downstream equipment being damaged for example by pieces of ice that might otherwise form and accumulate along the inner surface 156 of the duct 149 and eventually break free.

Further, in an exemplary embodiment, portions of the ECS refrigeration unit 14 have inner surfaces that have an ice-phobic treatment(s) 158 to resist or prevent ice formation as discussed above. In particular, the ECS refrigeration unit 14 includes conduit sections 176 (e.g., pipe sections) that direct the flow of air though the ECS refrigeration unit 14 to the various unit operation components to cool the air and form the sub-freezing air stream 146. As illustrated in FIG. 2, one or more of the conduit sections 176 in regions 178 of the ECS refrigeration unit 14 have inner surfaces that have an ice-phobic treatment(s) 158. For example, this includes, independently, one or more of the the conduit sections 176 downstream from heat exchangers 118 and/or 120, the turbine 124, the low limit valve 128, and/or the water separator 139.

Referring to FIG. 1, as briefly discussed above, a portion of the hot bleed air is introduced to the manifold 58 via line 39. The manifold 58 and the manifold 60 are cooperatively configured to supply the portion of the hot bleed air via line 160 and the sub-freezing air stream via line 162, respectively, that are mixed or combined together downstream to form a mixed air stream at line 164 and advanced therefrom to the vehicle supply duct 62. In an exemplary embodiment, along line 160 is a control valve 166 that regulates the flow rate of hot bleed air out of the manifold 58 for controlling the temperature of the mixed air stream (combined with the sub-freezing air stream) along line 162. In an exemplary embodiment, the mixed air stream has a temperature of from about 20°C to about 24.4°C (68 to about 76°F) and a pressure of from about 103 kPa to about 117 kPa (15 psia to about 17 psia).

The vehicle supply duct 62 supplies the interior 18 of the vehicle 10 with the mixed air stream. Although only a single vehicle supply duct 62 is shown, it is to be understood that the vehicle 10 may include more than one vehicle supply duct (e.g., multiple cabin interior zone ducts, for example, that optionally can be controlled independently) that supply the interior 18 of the vehicle 10 with the mixed air stream. A valve 168 is in fluid communication with the interior 18 and is configured to exhaust a portion of the interior air 20 out of the vehicle, for example, to control pressure of the interior air 20 remaining in the interior 18.

Referring to FIG. 5, a method 300 for operating an environmental control system (ECS) for a vehicle in accordance with an exemplary embodiment is provided. The method 300 includes introducing (STEP 302) a first portion and a second portion of hot bleed air to an ECS refrigeration unit. Ambient air is introduced (STEP 304) to the ECS refrigeration unit. Heat is indirectly exchanged (STEP 306) between the first portion of the hot bleed air and the ambient air in the ECS refrigeration unit to form a partially cooled, hot air stream.

The method 300 further includes operating (STEP 308) the ECS refrigeration unit to compress, further indirect heat exchange, and expand the partially cooled, hot air stream to form a cooled and expanded air stream having a temperature of less than -3.33°C (26°F). The second portion of hot bleed air is advanced (STEP 310) through a low limit valve in the ECS refrigeration unit to introduce the second portion of the hot bleed air to the cooled and expanded air stream. The second portion regulates the low limit valve with a low limit valve control to control the rate of introduction of the second portion of the hot bleed air to the cooled and expanded air stream to form a combined air stream that when exiting the ECS refrigeration unit is a sub-freezing air stream having a temperature of less than 0°C (32°F) but greater than the cooled and expanded air stream.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It being understood that various changes may be made in the function and arrangement of elements described in an exemplary embodiment without departing from the scope of the disclosure as set forth in the appended claims.

## Claims

1. An environmental control system (ECS, 12) for an aircraft (10), the environmental control system (12) comprising:
an ECS refrigeration unit (14, 14') configured to receive ambient air (28) and a first portion (110) and a second portion (112) of hot bleed air, wherein the ECS refrigeration unit (14, 14') is operable to:
indirectly exchange heat between the first portion of the hot bleed air (110) and the ambient air (28) to form a partially cooled, hot air stream (130); and
compress, further indirect heat exchange, and expand the partially cooled, hot air stream (130) to form a cooled and expanded air stream (132) having a temperature of less than -3.33°C (26°F), the ECS refrigeration unit (14, 14') comprising a low limit valve (128) configured to introduce the second portion of the hot bleed air (112) to the cooled and expanded air stream (132); and
**characterized in that** the ECS (12) comprises a low limit valve control (142) configured to regulate the low limit valve (128) to control the rate of introduction of the second portion of the hot bleed air (112) to the cooled and expanded air stream (132) to form a combined air stream (144) that when exiting the ECS refrigeration unit is a sub-freezing air stream (146) having a temperature of less than 0°C (32°F) but greater than the cooled and expanded air stream (132),
and
a duct (149) that is disposed downstream from the ECS refrigeration unit (14, 14') and that is configured to receive the sub-freezing air stream (146), and wherein the duct (149) has an inner surface (56) that comprises an ice-phobic treatment (158).

2. The environmental control system of claim 1, wherein the ECS refrigeration unit (14, 14') is operable to form the cooled and expanded air stream (132) having a temperature of from -6.67°C (20°F) to -3.89°C (25°F).

3. The environmental control system of claims 1 or 2, wherein the ECS refrigeration unit (14, 14') and the lower limit valve control (142) are cooperatively configured to form the sub-freezing air stream (146) having a temperature of from -3.89°C (25°F) to -1.11°C (30°F) when exiting the ECS refrigeration unit (14, 14').

4. The environmental control system of any one of claims 1-3, wherein the ECS refrigeration unit (14, 14') comprises:
a first heat exchanger (114) that is configured to be in fluid communication with the ambient air (28) and the first portion of the hot bleed air (110) for indirect heat exchange to form the partially cooled, hot air stream (130);
a compressor (122) in fluid communication with the first heat exchanger (114) and configured to receive and compress the partially cooled, hot air stream (130) to form a compressed, hot air stream (134); and
a second heat exchanger (116) that is configured to be in fluid communication with the ambient air (28) and the compressed, hot air stream (134) for indirect heat exchange to form a first partially cooled, compressed, hot air stream (136), and wherein the ECS refrigeration unit (14, 14') is operable to further indirect heat exchange and expand the first partially cooled, compressed, hot air stream (136) to form the cooled and expanded air stream (132).

5. The environmental control system of claim 4, wherein the ECS refrigeration unit comprises:
a third heat exchanger (118) in fluid communication with the second heat exchanger (116) and configured to receive and partially cool the first partially cooled, compressed, hot air stream (136) to form a second partially cooled, compressed, hot air stream (138);
a fourth heat exchanger (120) in fluid communication with the third heat exchanger (118) and configured to receive and partially cool the second partially cooled, compressed, hot air stream (138) to form an additionally partially cooled, compressed, hot air stream (140) that is passed through the third heat exchanger (118) for indirect heat exchange with the first partially cooled, compressed, hot air stream (136); and
a turbine (124) in fluid communication with the third heat exchanger (118) and configured to receive, expand and cool the additionally partially cooled, compressed, hot air stream (140) to form the cooled and expanded air stream (132), and wherein the fourth heat exchanger (120) is in fluid communication with the turbine (124) and the low limit valve (128) to receive the combined air stream (144) that is passed through the fourth heat exchanger (120) for indirect heat exchange with the second partially cooled, compressed, hot air stream (138) prior to exiting the ECS refrigeration unit (14, 14') as the sub-freezing air stream (146),
wherein the ECS refrigeration unit (14, 14') optionally comprises a plurality of conduit sections (176) that direct the flow of air though the ECS refrigeration unit (14, 14') to form the sub-freezing air stream (146), wherein one or more of the conduit sections (176) downstream from the third heat exchanger (118), fourth heat exchanger (120), the turbine (124), and/or the low limit valve (128) have inner surfaces that have an ice-phobic treatment(s) (158).

6. The environmental control system of any one of claims 1-5, further comprising a temperature sensor (150) that is configured to measure a temperature of the sub-freezing air stream (146) and that is in communication with the low limit valve control (142) to provide a signal indicative of the temperature of the sub-freezing air stream (146) to the low limit valve control (142), wherein the low limit valve control (142) is configured to regulate the low limit valve (128) in response to the signal,
wherein the temperature sensor (150) is disposed in the duct (149) disposed downstream from the ECS refrigeration unit (14, 14').

7. A method for operating an environmental control system (ECS) according to any one of claims 1 to 6, the method comprising the steps of:
introducing a first portion (110) and a second portion (112) of hot bleed air to an ECS refrigeration unit (14, 14');
introducing ambient air (28) to the ECS refrigeration unit (14, 14');
indirectly exchanging heat between the first portion of the hot bleed air (110) and the ambient air (28) in the ECS refrigeration unit (14, 14') to form a partially cooled, hot air stream (130);
operating the ECS refrigeration unit (14, 14') to compress, further indirect heat exchange, and expand the partially cooled, hot air stream (130) to form a cooled and expanded air stream (132) having a temperature of less than -3.33°C (26°F); and
advancing the second portion of hot bleed air (112) through a low limit valve (128) in the ECS refrigeration unit (14, 14') to introduce the second portion of the hot bleed air (112) to the cooled and expanded air stream (132), wherein advancing the second portion (112) comprises regulating the low limit valve (128) with a low limit valve control (142) to control the rate of introduction of the second portion of the hot bleed air (112) to the cooled and expanded air stream (132) to form a combined air stream (144) that when exiting the ECS refrigeration unit (14, 14') is a sub-freezing air stream (146) having a temperature of less than 0°C (32°F) but greater than the cooled and expanded air stream (132).

8. The method of claim 7, further comprising steps of:
sensing a temperature of the sub-freezing air stream with a temperature sensor (150); and
communicating a signal from the temperature sensor (150) to the low limit valve control (142) indicative of the temperature of the sub-freezing air stream (146), wherein the low limit valve control (142) is configured to regulate the low limit valve (128) in response to the signal.

9. The method of claims 7 or 8, wherein advancing comprises regulating the low limit valve (128) with the low limit valve control (142) to form the combined air stream (144) that exits the ECS refrigeration unit (14, 14') as the sub-freezing air stream (146) having a temperature of from -3.89°C (25°F) to -1.11°C (30°F).

10. An aircraft (10) comprising:
an aircraft structure (16) at least partially surrounding an interior (18);
a hot air source supported by the aircraft structure (16) and configured to produce hot air that is extracted from the hot air source as hot bleed air; and
an environmental control system (ECS, 12) according to any one of claims 1-6 configured to be in fluid communication with the interior (18).

11. The aircraft of claim 10, wherein the hot air source is an auxiliary power unit (APU, 55) that is coupled to the aircraft structure (16).

12. The aircraft of claims 10 or 11, wherein the hot air source is an engine (24) that is coupled to the aircraft structure (16).

13. The aircraft of any one of claims 10-12, wherein the environmental control system (12) comprises:
a first manifold (58) in fluid communication with the hot air source to receive a third portion of the hot bleed air; and
a second manifold (60) in fluid communication with the ECS refrigeration unit (14, 14') to receive the sub-freezing air stream, wherein the first manifold (58) and the second manifold (60) are cooperatively configured to supply the third portion of the hot bleed air and the sub-freezing air stream, respectively, that are combined together downstream to form a mixed air stream that is fluidly communicated to the interior (18).

14. The aircraft of claim 13, wherein the environmental control system (12) comprises an aircraft supply duct (62) that is disposed in the interior (18) and that is configured to introduce the mixed air stream to the interior (18), and wherein the mixed air stream has a temperature of from 20°C (68°F) to 24.44°C (76°F).

## Patentansprüche

1. Umgebungskontrollsystem (environmental control system - ECS, 12) für ein Flugzeug (10), wobei das Umgebungskontrollsystem (12) Folgendes umfasst:
eine ECS-Kühleinheit (14, 14'), die dafür konfiguriert ist, Umgebungsluft (28) und einen ersten Anteil (110) und einen zweiten Anteil (112) von heißer Zapfluft aufzunehmen, wobei die ECS-Kühleinheit (14, 14') zu Folgendem funktionsfähig ist:
indirekt Wärme zwischen dem ersten Anteil der heißen Zapfluft (110) und der Umgebungsluft (28) auszutauschen, um einen teilweise gekühlten, heißen Luftstrom (130) zu bilden, und
den teilweise gekühlten, heißen Luftstrom (130) zu komprimieren, weiter indirekt Wärme auszutauschen und zu expandieren, um einen gekühlten und expandierten Luftstrom (132) zu bilden, der eine Temperatur von weniger als -3,33°C (26°F) aufweist, wobei die ECS-Kühleinheit (14, 14') ein Untergrenzenventil (128) umfasst, das dafür konfiguriert ist, den zweiten Anteil der heißen Zapfluft (112) in den gekühlten und expandierten Luftstrom (132) einzuleiten, und
**dadurch gekennzeichnet, dass** das ECS (12) eine Untergrenzenventil-Steuerung (142) umfasst, die dafür konfiguriert ist, das Untergrenzenventil (128) zu regulieren, um die Rate der Einleitung des zweiten Anteils der heißen Zapfluft (112) in den gekühlten und expandierten Luftstrom (132) zu regeln, um einen kombinierten Luftstrom (144) zu bilden, der, wenn er die ECS-Kühleinheit verlässt, ein Luftstrom (146) unterhalb des Gefrierpunkts zu bilden, der eine Temperatur von weniger als 0°C (32°F), aber höher als der gekühlte und expandierte Luftstrom (132), aufweist, und
eine Leitung (149), die stromabwärts von der ECS-Kühleinheit (14, 14') angeordnet ist und die dafür konfiguriert ist, den Luftstrom (146) unterhalb des Gefrierpunkts aufzunehmen und wobei die Leitung (149) eine Innenfläche (56) aufweist, die eine Eis abweisende Behandlung (158) umfasst.

2. Umgebungskontrollsystem nach Anspruch 1, wobei die ECS-Kühleinheit (14, 14') funktionsfähig ist, um den gekühlten und expandierten Luftstrom (132) zu bilden, der eine Temperatur von -6,67°C (20°F) bis -3,89°C (25°F) aufweist.

3. Umgebungskontrollsystem nach Anspruch 1 oder 2, wobei die ECS-Kühleinheit (14, 14') und die Untergrenzenventil-Steuerung (142) zusammenwirkend dafür konfiguriert sind, den Luftstrom (146) unterhalb des Gefrierpunkts zu bilden, der eine Temperatur von -3,89°C (25°F) bis -1,11°C (30°F) aufweist, wenn er die ECS-Kühleinheit (14, 14') verlässt.

4. Umgebungskontrollsystem nach einem der Ansprüche 1 bis 3, wobei die ECS-Kühleinheit (14, 14') Folgendes umfasst:
einen ersten Wärmetauscher (114), der dafür konfiguriert ist, in Fluidverbindung mit der Umgebungsluft (28) und dem ersten Anteil der heißen Zapfluft (110) zu stehen, für einen indirekten Wärmeaustausch, um den teilweise gekühlten, heißen Luftstrom (130) zu bilden,
einen Kompressor (122) in Fluidverbindung mit dem ersten Wärmetauscher (114) und dafür konfiguriert, den teilweise gekühlten, heißen Luftstrom (130) aufzunehmen und zu komprimieren, um einen komprimierten, heißen Luftstrom (134) zu bilden, und
einen zweiten Wärmetauscher (116), der dafür konfiguriert ist, in Fluidverbindung mit der Umgebungsluft (28) und dem komprimierten, heißen Luftstrom (134) zu stehen, für einen indirekten Wärmeaustausch, um einen ersten teilweise gekühlten, komprimierten, heißen Luftstrom (136) zu bilden, und wobei die ECS-Kühleinheit (14, 14') funktionsfähig ist, um weiter indirekt Wärme zu tauschen und den ersten teilweise gekühlten, komprimierten, heißen Luftstrom (136) zu expandieren, um den gekühlten und expandierten Luftstrom (132) zu bilden.

5. Umgebungskontrollsystem nach Anspruch 4, wobei die ECS-Kühleinheit Folgendes umfasst:
einen dritten Wärmetauscher (118) in Fluidverbindung mit dem zweiten Wärmetauscher (116) und dafür konfiguriert, den ersten teilweise gekühlten, komprimierten, heißen Luftstrom (136) aufzunehmen und teilweise zu kühlen, um einen zweiten teilweise gekühlten, komprimierten, heißen Luftstrom (138) zu bilden,
einen vierten Wärmetauscher (120) in Fluidverbindung mit dem dritten Wärmetauscher (118) und dafür konfiguriert, den zweiten teilweise gekühlten, komprimierten, heißen Luftstrom (138) aufzunehmen und teilweise zu kühlen, um einen zusätzlich teilweise gekühlten, komprimierten, heißen Luftstrom (140) zu bilden, der für einen indirekten Wärmeaustausch mit dem ersten teilweise gekühlten, komprimierten, heißen Luftstrom (136) durch den dritten Wärmetauscher (118) geführt wird, und
eine Turbine (124) in Fluidverbindung mit dem dritten Wärmetauscher (118) und dafür konfiguriert, den zusätzlich teilweise gekühlten, komprimierten, heißen Luftstrom (140) aufzunehmen, zu expandieren und zu kühlen, um den gekühlten und expandierten Luftstrom (132) zu bilden, und wobei der vierte Wärmetauscher (120) in Fluidverbindung mit der Turbine (124) und dem Untergrenzenventil (128) steht, um den kombinierten Luftstrom (144) aufzunehmen, der für einen indirekten Wärmeaustausch mit dem zweiten teilweise gekühlten, komprimierten, heißen Luftstrom (138) durch den vierten Wärmetauscher (120) geführt wird, bevor er die ECS-Kühleinheit (14, 14') als der Luftstrom (146) unterhalb des Gefrierpunkts verlässt,
wobei die ECS-Kühleinheit (14, 14') wahlweise eine Vielzahl von Kanalabschnitten (176) umfasst, die den Luftstrom durch die ECS-Kühleinheit (14, 14') leiten, um den Luftstrom (146) unterhalb des Gefrierpunkts zu bilden, wobei einer oder mehrere der Kanalabschnitte (176) stromabwärts von dem dritten Wärmetauscher (118), dem vierten Wärmetauscher (120), der Turbine (124) und/oder dem Untergrenzenventil (128) Innenflächen aufweisen, die (eine) Eis abweisende Behandlung(en) (158) aufweisen.

6. Umgebungskontrollsystem nach einem der Ansprüche 1 bis 5, das ferner einen Temperatursensor (150) umfasst, der dafür konfiguriert ist, eine Temperatur des Luftstroms (146) unterhalb des Gefrierpunkts zu messen, und der in Verbindung mit der Untergrenzenventil-Steuerung (142) steht, um ein Signal, das auf die Temperatur des Luftstroms (146) unterhalb des Gefrierpunkts schließen lässt, für die Untergrenzenventil-Steuerung (142) bereitzustellen, wobei die Untergrenzenventil-Steuerung (142) dafür konfiguriert ist, das Untergrenzenventil (128) als Reaktion auf das Signal zu regulieren,
wobei der Temperatursensor (150) in der Leitung (149) angeordnet ist, die stromabwärts von der ECS-Kühleinheit (14, 14') angeordnet ist.

7. Verfahren zum Betreiben eines Umgebungskontrollsystems (ECS) nach einem der Ansprüche 1 bis 6, wobei das Verfahren die folgenden Schritte umfasst:
Einleiten eines ersten Anteils (110) und eines zweiten Anteils (112) von heißer Zapfluft in eine ECS-Kühleinheit (14, 14'),
Einleiten von Umgebungsluft (28) in die ECS-Kühleinheit (14, 14'),
indirektes Austauschen von Wärme zwischen dem ersten Anteil der heißen Zapfluft (110) und der Umgebungsluft (28) in der ECS-Kühleinheit (14, 14'), um einen teilweise gekühlten, heißen Luftstrom (130) zu bilden,
Betreiben der ECS-Kühleinheit (14, 14'), um den teilweise gekühlten, heißen Luftstrom (130) zu komprimieren, weiter indirekt Wärme auszutauschen und zu expandieren, um einen gekühlten und expandierten Luftstrom (132) zu bilden, der eine Temperatur von weniger als -3,33°C (26°F) aufweist, und
Weiterleiten des zweiten Anteils der heißen Zapfluft (112) durch ein Untergrenzenventil (128) in der ECS-Kühleinheit (14, 14'), um den zweiten Anteil der heißen Zapfluft (112) in den gekühlten und expandierten Luftstrom (132) einzuleiten, wobei das Weiterleiten des zweiten Anteils (112) das Regulieren des Untergrenzenventils (128) mit einer Untergrenzenventil-Steuerung (142) umfasst, um die Rate der Einleitung des zweiten Anteils der heißen Zapfluft (112) in den gekühlten und expandierten Luftstrom (132) zu regeln, um einen kombinierten Luftstrom (144) zu bilden, der, wenn er die ECS-Kühleinheit (14, 14') verlässt, ein Luftstrom (146) unterhalb des Gefrierpunkts ist, der eine Temperatur von weniger als 0°C (32°F), aber höher als der gekühlte und expandierte Luftstrom (132), aufweist.

8. Verfahren nach Anspruch 7, das ferner die folgenden Schritte umfasst:
Abfühlen einer Temperatur des Luftstroms unterhalb des Gefrierpunkt mit einem Temperatursensor (150) und
Mitteilen eines Signals, das auf die Temperatur des Luftstroms (146) unterhalb des Gefrierpunkts schließen lässt, von dem Temperatursensor (150) an die Untergrenzenventil-Steuerung (142), wobei die Untergrenzenventil-Steuerung (142) dafür konfiguriert ist, das Untergrenzenventil (128) als Reaktion auf das Signal zu regulieren.

9. Verfahren nach Anspruch 7 oder 8, wobei das Weiterleiten das Regulieren des Untergrenzenventils (128) mit der Untergrenzenventil-Steuerung (142) umfasst, um den kombinierten Luftstrom (144) zu bilden, der die ECS-Kühleinheit (14, 14') als der Luftstrom (146) unterhalb des Gefrierpunkts verlässt, der eine Temperatur von -3,89°C (25°F) bis - 1,11°C (30°F) aufweist.

10. Flugzeug (10), das Folgendes umfasst:
eine Flugzeugstruktur (16), die zumindest teilweise ein Inneres (18) umgibt,
eine Heißluftquelle, die durch die Flugzeugstruktur (16) getragen wird und dafür konfiguriert ist, heiße Luft zu erzeugen, die aus der Heißluftquelle als heiße Zapfluft gewonnen wird, und
ein Umgebungskontrollsystem (ECS, 12) nach einem der Ansprüche 1 bis 6, das dafür konfiguriert ist, in Fluidverbindung mit dem Inneren (18) zu stehen.

11. Flugzeug nach Anspruch 10, wobei die Heißluftquelle ein Hilfstriebwerk (auxiliary power unit - APU, 55) ist, das an die Flugzeugstruktur (16) gekoppelt ist.

12. Flugzeug nach Anspruchs 10 oder 11, wobei die Heißluftquelle ein Triebwerk (24) ist, das an die Flugzeugstruktur (16) gekoppelt ist.

13. Flugzeug nach einem der Ansprüche 10-12, wobei das Umgebungskontrollsystem (12) Folgendes umfasst:
einen ersten Verteiler (58) in Fluidverbindung mit der Heißluftquelle, um einen dritten Anteil der heißen Zapfluft aufzunehmen, und
einen zweiten Verteiler (60) in Fluidverbindung mit der ECS-Kühleinheit (14, 14'), um den Luftstrom unterhalb des Gefrierpunkts aufzunehmen, wobei der erste Verteiler (58) und der zweite Verteiler (60) zusammenwirkend dafür konfiguriert sind, jeweils den dritten Anteil der heißen Zapfluft beziehungsweise den Luftstrom unterhalb des Gefrierpunkts zuzuführen, die stromabwärts miteinander kombiniert werden, um einen gemischten Luftstrom zu bilden, der fluidmäßig zu dem Inneren weitergeleitet wird (18).

14. Flugzeug nach Anspruch 13, wobei das Umgebungskontrollsystem (12) eine Flugzeugversorgungsleitung (62) umfasst, die in dem Inneren (18) angeordnet und die dafür konfiguriert ist, den gemischten Luftstrom in das Innere (18) einzuleiten, und wobei der gemischte Luftstrom eine Temperatur von 20°C (68°F) bis 24,44°C (76°F) aufweist.

## Revendications

1. Système de contrôle environnemental (ECS, 12) pour un aéronef (10), le système de contrôle environnemental (12) comprenant:
une unité de réfrigération ECS (14, 14') configurée pour recevoir de l'air ambiant (28) et une première partie (110) et une deuxième partie (112) d'air de prélèvement chaud, l'unité de réfrigération ECS (14, 14') pouvant fonctionner pour:
échanger indirectement de la chaleur entre la première partie de l'air de prélèvement chaud (110) et l'air ambiant (28) pour former un flux d'air chaud partiellement refroidi (130); et
comprimer, échanger indirectement davantage de chaleur et dilater le flux d'air chaud partiellement refroidi (130) pour former un flux d'air refroidi et dilaté (132) ayant une température inférieure à -3,33°C (26°F), l'unité de réfrigération ECS (14, 14') comprenant une vanne de limite basse (128) configurée pour introduire la deuxième partie de l'air de prélèvement chaud (112) dans le flux d'air refroidi et dilaté (132); et
**caractérisé en ce que** l'ECS (12) comprend une commande de soupape de limite basse (142) configurée pour réguler la soupape de limite basse (128) afin de contrôler le taux d'introduction de la deuxième partie de l'air de prélèvement chaud (112) dans le flux d'air refroidi et dilaté (132) pour former un flux d'air combiné (144) qui, lorsqu'il sort de l'unité de réfrigération ECS, est un flux d'air de sous-congélation (146) ayant une température inférieure à 0°C (32°F) mais supérieure au flux d'air refroidi et dilaté (132), et
un conduit (149) qui est disposé en aval de l'unité de réfrigération ECS (14, 14') et qui est configuré pour recevoir le flux d'air de sous-congélation (146), et dans lequel le conduit (149) a une surface intérieure (56) qui comprend un traitement glaciophobe (158).

2. Système de contrôle environnemental selon la revendication 1, dans lequel l'unité de réfrigération ECS (14, 14') peut fonctionner pour former le flux d'air refroidi et dilaté (132) ayant une température de -6.67°C (20°F) à -3.89°C (25°F).

3. Système de contrôle environnemental selon les revendications 1 ou 2, dans lequel l'unité de réfrigération ECS (14, 14') et la commande de soupape de limite inférieure (142) sont configurées de manière coopérative pour former le flux d'air de sous-congélation (146) ayant une température de -3.89°C (25°F) à -1.11°C (30°F) à la sortie de l'unité de réfrigération ECS (14, 14').

4. Système de contrôle environnemental selon une quelconque des revendications 1 à 3, dans lequel l'unité de réfrigération ECS (14, 14') comprend:
un premier échangeur de chaleur (114) qui est configuré pour être en communication fluidique avec l'air ambiant (28) et la première partie de l'air de prélèvement chaud (110) pour un échange de chaleur indirect afin de former le flux d'air chaud partiellement refroidi (130);
un compresseur (122) en communication fluidique avec le premier échangeur de chaleur (114) et configuré pour recevoir et comprimer le flux d'air chaud partiellement refroidi (130) pour former un flux d'air chaud comprimé (134); et
un deuxième échangeur de chaleur (116) qui est configuré pour être en communication fluidique avec l'air ambiant (28) et le flux d'air chaud comprimé (134) pour un échange de chaleur indirect afin de former un premier flux d'air chaud comprimé partiellement refroidi (136), et dans lequel l'unité de réfrigération ECS (14, 14') peut fonctionner pour un échange de chaleur indirect supplémentaire et dilater le premier flux d'air chaud comprimé partiellement refroidi (136) pour former le flux d'air refroidi et dilaté (132).

5. Système de contrôle environnemental selon la revendication 4, dans lequel l'unité de réfrigération ECS comprend:
un troisième échangeur de chaleur (118) en communication fluidique avec le deuxième échangeur de chaleur (116) et configuré pour recevoir et refroidir partiellement le premier flux d'air chaud comprimé partiellement refroidi (136) pour former un deuxième flux d'air chaud comprimé partiellement refroidi (138);
un quatrième échangeur de chaleur (120) en communication fluidique avec le troisième échangeur de chaleur (118) et configuré pour recevoir et refroidir partiellement le deuxième flux d'air chaud comprimé partiellement refroidi (138) pour former un flux d'air chaud comprimé partiellement refroidi supplémentaire (140) qui passe à travers le troisième échangeur de chaleur (118) pour un échange de chaleur indirect avec le premier flux d'air chaud comprimé partiellement refroidi (136); et
une turbine (124) en communication fluidique avec le troisième échangeur de chaleur (118) et configurée pour recevoir, dilater et refroidir le flux d'air chaud comprimé partiellement refroidi (140) supplémentaire pour former le flux d'air refroidi et dilaté (132), et dans lequel le quatrième échangeur de chaleur (120) est en communication fluidique avec la turbine (124) et la soupape de limite basse (128) pour recevoir le flux d'air combiné (144) qui passe à travers le quatrième échangeur de chaleur (120) pour un échange de chaleur indirect avec le deuxième flux d'air chaud comprimé partiellement refroidi (138) avant de sortir de l'unité de réfrigération ECS (14, 14') en tant que flux d'air de sous-congélation (146),
dans lequel l'unité de réfrigération ECS (14, 14') comprend éventuellement une pluralité de sections de conduit (176) qui dirigent le flux d'air à travers l'unité de réfrigération ECS (14, 14') pour former le flux d'air de sous-congélation (146), dans laquelle une ou plusieurs des sections de conduit (176) en aval du troisième échangeur de chaleur (118), du quatrième échangeur de chaleur (120), de la turbine (124) et/ou de la vanne de limite basse (128) ont des surfaces intérieures qui ont un ou plusieurs traitements glaciophobes (158).

6. Système de contrôle environnemental selon une quelconque des revendications 1 à 5, comprenant en outre un capteur de température (150) qui est configuré pour mesurer une température du flux d'air de sous-congélation (146) et qui est en communication avec la commande de soupape de limite basse (142) pour fournir un signal indicatif de la température du flux d'air de sous-congélation (146) à la commande de soupape de limite basse (142), dans lequel la commande de soupape de limite basse (142) est configurée pour réguler la soupape de limite basse (128) en réponse au signal,
dans lequel le capteur de température (150) est disposé dans le conduit (149) disposé en aval de l'unité de réfrigération ECS (14, 14').

7. Procédé de fonctionnement d'un système de contrôle environnemental (ECS) selon une quelconque des revendications 1 à 6, le procédé comprenant les étapes consistant à:
introduire une première partie (110) et une deuxième partie (112) d'air de prélèvement chaud dans une unité de réfrigération ECS (14, 14');
introduire de l'air ambiant (28) dans l'unité de réfrigération ECS (14, 14');
échanger indirectement de la chaleur entre la première partie de l'air de prélèvement chaud (110) et l'air ambiant (28) dans l'unité de réfrigération ECS (14, 14') pour former un flux d'air chaud partiellement refroidi (130);
faire fonctionner l'unité de réfrigération ECS (14, 14') pour comprimer, échanger indirectement davantage de chaleur et dilater le flux d'air chaud partiellement refroidi (130) pour former un flux d'air refroidi et dilaté (132) ayant une température inférieure à-3.33°C (26°F); et
avancer la deuxième partie d'air de prélèvement chaud (112) à travers une vanne de limite basse (128) dans l'unité de réfrigération ECS (14, 14') pour introduire la deuxième partie de l'air de prélèvement chaud (112) dans le flux d'air refroidi et dilaté (132), dans lequel faire avancer la deuxième partie (112) comprend la régulation de la vanne de limite basse (128) avec une commande de vanne de limite basse (142) pour contrôler le taux d'introduction de la deuxième partie de l'air de prélèvement chaud (112) dans le flux d'air refroidi et dilaté (132) pour former un flux d'air combiné (144) qui, lorsqu'il sort de l'unité de réfrigération ECS (14, 14'), est un flux d'air de sous-congélation (146) ayant une température inférieure à 0°C (32°F) mais supérieure au flux d'air refroidi et dilaté (132).

8. Procédé selon la revendication 7, comprenant en outre les étapes consistant à:
détecter la température du flux d'air de sous-congélation à l'aide d'un capteur de température (150); et
communiquer un signal du capteur de température (150) à la commande de soupape de limite basse (142) indiquant la température du flux d'air de sous-congélation (146), dans lequel la commande de soupape de limite basse (142) est configurée pour réguler la soupape de limite basse (128) en réponse au signal.

9. Procédé selon les revendications 7 ou 8, dans lequel l'avancement comprend la régulation de la vanne de limite basse (128) avec la commande de vanne de limite basse (142) pour former le flux d'air combiné (144) qui sort de l'unité de réfrigération ECS (14, 14') en tant que flux d'air sous-congélation (146) ayant une température de -3.89°C (25°F) à -1.11°C (30°F).

10. Aéronef (10) comprenant:
une structure d'aéronef (16) entourant au moins partiellement un intérieur (18);
une source d'air chaud supportée par la structure de l'aéronef (16) et configurée pour produire de l'air chaud qui est extrait de la source d'air chaud en tant qu'air de prélèvement chaud; et
un système de contrôle environnemental (ECS, 12) selon une quelconque des revendications 1 à 6, configuré pour être en communication fluidique avec l'intérieur (18).

11. Aéronef selon la revendication 10, dans lequel la source d'air chaud est une unité d'alimentation auxiliaire (APU, 55) qui est couplée à la structure de l'aéronef (16).

12. Aéronef selon les revendications 10 ou 11, dans lequel la source d'air chaud est un moteur (24) qui est couplé à la structure de l'aéronef (16).

13. Aéronef selon une quelconque des revendications 10 à 12, dans lequel le système de contrôle environnemental (12) comprend:
un premier collecteur (58) en communication fluidique avec la source d'air chaud pour recevoir une troisième partie de l'air de prélèvement chaud; et
un deuxième collecteur (60) en communication fluidique avec l'unité de réfrigération ECS (14, 14') pour recevoir le flux d'air sous-congélation, dans lequel le premier collecteur (58) et le deuxième collecteur (60) sont configurés de manière coopérative pour fournir la troisième partie de l'air de prélèvement chaud et le flux d'air sous-congélation, respectivement, qui sont combinés conjointement en aval pour former un flux d'air mixte qui est en communication fluidique avec l'intérieur (18).

14. Aéronef selon la revendication 13, dans lequel le système de contrôle environnemental (12) comprend un conduit d'alimentation d'aéronef (62) qui est disposé à l'intérieur (18) et qui est configuré pour introduire le flux d'air mélangé à l'intérieur (18), et dans lequel le flux d'air mélangé a une température de 20°C (68°F) à 24.44°C (76°F).
